(19) Europäisches Patentamt
European Patent Office
Office européen des brevets

(11) **EP 3 816 664 A1**

(12) **EUROPEAN PATENT APPLICATION**

(43) Date of publication:
**05.05.2021 Bulletin 2021/18**

(51) Int Cl.:
**G01S 7/539** (2006.01)    **G01S 15/04** (2006.01)
**G01S 15/06** (2006.01)    **G01S 15/74** (2006.01)

(21) Application number: **19382961.1**

(22) Date of filing: **04.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Fundación Tecnalia Research & Innovation**
  **20009 San Sebastián, Guipúzcoa (ES)**
• **Universidad del Pais Vasco - Euskal Herriko Unibertsitatea (UPV/EHU)**
  **48940 Leioa (ES)**

(72) Inventors:
• **Oregui, Izaskun**
  **20009 San Sebastián - Guipúzcoa (ES)**
• **Osaba, Eneko**
  **20009 San Sebastián - Guipúzcoa (ES)**
• **Bilbao, Miren Nekane**
  **48940 Leioa (ES)**
• **Del Ser, Javier**
  **20009 San Sebastián - Guipúzcoa (ES)**

(74) Representative: **Balder IP Law, S.L.**
  **Paseo de la Castellana 93**
  **5ª planta**
  **28046 Madrid (ES)**

(54) **METHOD, SYSTEM AND COMPUTER PROGRAM PRODUCT FOR IDENTIFYING UNDERWATER OBJECTS**

(57)    A computer-implemented method for detecting and identifying underwater objects, comprising: emitting by a sonar device (2) located in a vessel (1) at least one acoustic signal (3); receiving by the sonar device (2) at least one echo signal ($U^{QUERY}_{\theta,\phi}$); determining if an underwater object (4) has been detected by verifying whether or not the at least one received echo signal ($U^{QUERY}_{\theta,\phi}$) is the consequence of a collision of the at least one acoustic signal (3) with an underwater object (4), and if no underwater object (4) has been identified, the analysis is ended; if the presence of an underwater object (4) is detected: applying a time-series pattern recognition process to said at least one received echo signal ($U^{QUERY}_{\theta,\phi}$); delivering a set of numerical outputs $w^k = \{ w^k_1, ..., w^k_m, ..., w^k_M, w_\emptyset \}$, where $w^k_m$ denotes the estimated likelihood that an echo beam sent in the k-th direction $(\theta_k, \phi_k) \in \theta \times \Phi$ corresponds to a tag $l_m$ of a set of tags $\{l_1, ..., l_m, ..., l_M\}$ previously defined, wherein each of the elements $l_m$ of the set of tags represents a tag with certain features; and $w_\emptyset$ denotes the probability that no object was detected; predicting from the set of numerical outputs $w^k$ the tag type $(\hat{l})$ of the detected underwater object (4).

**FIG. 1**

EP 3 816 664 A1

**Description**

**TECHNICAL FIELD**

The present invention relates to the field of detection and identification of objects using Sound Navigation and Ranging technology.

**STATE OF THE ART**

Sound Navigation and Ranging (sonar) is a technique based on sound propagation. Sonar is used for navigation, communications and detection of objects, such as underwater objects. In particular, sonar is often used for acoustically locating objects of interest in the water. Typically, a sonar, for example equipped in a ship or vessel, emits acoustic signals, in particular acoustic pulses -also referred to as pings- at a fixed frequency $f$ that are propagated through the medium -in this case, water- until they collide with a nearby object, also referred to as target. After collision the emitted signals bounce back to the sonar receiver. By analyzing the received reflections, the existence of underwater objects within a certain distance can be detected. An apparatus and method for underwater detection of objects of interest using sound waves are for example disclosed in US9213099B1.

A need for classifying water objects has also been identified. For example, WO2015185032 discloses a method for classifying a water object into a specific vehicle category based on a previously determined parameter rate. Exemplary vehicle categories given in WO2015185032 are: a first category formed by fish trawlers or small motorized vessels; a second one formed by submarines, autonomous underwater vehicles (AUVs) and remotely operated vehicles (ROVs); and a third one formed by large container ships. Categories may be established according to speed, size or applications criteria. A water object is assigned to a water object class by means of a comparison, a correlation or other comparative functions.

Therefore, there is a need to develop an improved method and system for identifying underwater objects.

**DESCRIPTION OF THE INVENTION**

The computer-implemented method and system for detecting and identifying underwater objects described in the present invention intends to solve the shortcomings of prior-art methods and systems therefor.

The method of the present disclosure performs underwater tag (UT) identification by using weighted ensembles of time-series classifiers. The method is implemented in a vessel or ship, such as a medium-sized ship, equipped with a sonar, whose records are used in the underwater tag classification. In the context of the present invention, a tag -also referred to as a label- is a buoy whose response to the echo of a sonar is well-known a priori. Having different tags permits to create a database with different types of buoys (tags) and their corresponding amplitude response to the echo. The presence of an object (buoy) is detected when there is a representative response to an echo. If the response to the echo is similar to one of the responses stored in the tag data base, then the object will be classified as a tag of the type having the similar response. If, on the contrary, the response to the echo is not similar to any one of the responses stored in the tag data base, then the object will be considered as "no tag" which, in the context of the present invention, is interpreted as if nothing (no object) has been detected. In other words, a tag identifies a type of object (a type of buoy). The sonar has one or more transmitters and one or more receivers. The goal is obtain one response per angular pulse. This may be obtained with one or more transmitters and one or more receivers. The sonar emits acoustic pulses -pings- at a certain frequency $f$. The pulses are propagated through the water until they collide with a nearby object or target. The pulses bounce back to the sonar receiver, where they are recorded for a posterior analysis. Depending on several factors, such as the geometry, composition, position and/or depth of the target, the received reflections -also referred to as echoes-, vary in terms of shape and wave frequency. Thus, the existence of underwater objects within a certain distance can be detected. Although the characteristics of the detected objects are unknown, an analysis of the received echo performed by a time-series based classifier enables to obtain the position and the type of previously known underwater tags.

A first aspect of the invention relates to a computer-implemented method for detecting and identifying underwater objects, comprising: emitting by a sonar device located in a vessel at least one acoustic signal; receiving by the sonar device at least one echo signal; determining if an underwater object has been detected by verifying whether or not the at least one received echo signal is the consequence of a collision of the at least one acoustic signal with an underwater object; and if no underwater object has been identified, the analysis is ended; if the presence of an underwater object is detected: applying a time-series pattern recognition process to said at least one received echo signal; delivering a set of numerical outputs $W^k = \{ w_1^k , \ldots, w_m^k , \ldots, w_M^k , W_\emptyset \}$, where $w_m^k$ denotes the estimated likelihood that an echo beam sent in the k-th direction $(\theta_k, \phi_k) \in \theta \times \Phi$ corresponds to a tag $I_m$ of a set of tags $\{I_1, ..., I_m, ..., I_M\}$ previously defined, wherein each of the elements $I_m$ of the set of tags represents a tag with certain features; and $w_\emptyset$ denotes the probability that no object was detected; predicting from the set of numerical outputs $w^k$ the tag type of the detected underwater object.

In embodiments of the invention, the step of determining if an object has been detected is done by comparing the signal to background noise ratio of the at least one echo signal with a threshold indicating a minimum signal to background noise ratio required to decide that an object has been detected.

In embodiments of the invention, the step of determining if an object has been detected further includes estimating the position of the object.

In embodiments of the invention, in order to predict the tag type of the detected underwater object, and therefore identify the detected object, an Elastic Similarity based Nearest Neighbor (ES-NN) classifier is used, the classifier comprising a knowledge database having a set

$$\mathcal{B}_{\text{ref}} = \{(B_m, I_m)\}^M_{m=1}$$

of annotated reference samples, wherein

$$B_m = (b_m^1, ..., b_m^t, ..., b_m^T) \in \mathbb{R}^T$$

represents the signature of the m-th reference sample, and $I_m \in \{1, ..., M\}$ its label. In order to predict the label of a query echo signal, the method may perform the following steps: computing a vector of distances $d^{\text{QUERY}} = (d_1^{QUERY}, ..., d_m^{QUERY}, ..., d_M^{QUERY})$, wherein $d_m^{QUERY}$ represents the similarity between $U^{\text{QUERY}}_{\theta,\phi}$ and the m-th signature in $\mathcal{B}_{\text{ref}}$; normalizing the computed distances by $\sum_{m=1}^M d_m^{QUERY}$ so as to sum 1; obtaining an approximation for the conditional probability $Pr(I_m| U^{\text{QUERY}}_{\theta,\phi}) \equiv w_m^{QUERY}$, representing the likelihood under which the query echo signal $U^{\text{QUERY}}_{\theta,\phi}$ is an echo bounced back by reflecting on a tag model m, where $w_m^{QUERY}$ denotes the estimated likelihood that the query echo beam sent in the k-th direction $(\theta_k, \phi_k) \in \theta \times \Phi$ corresponds to a tag $I_m$ of the set of labels $\{I_1, ..., I_m, ..., I_M\}$; assigning the label $\hat{l}$ of the most similar signature to the echo in the set $\mathcal{B}_{\text{ref}}$ as $\hat{l} = \frac{\arg max}{m \in \{1, ..., M\}} w_m^{QUERY}$, where $\hat{l}$ denotes the predicted class for the detected object.

In embodiments of the invention, together with the at least one echo signal, a K-sized set of neighboring echo beams is received by the sonar, the method further comprising: delivering a set of numerical outputs $w^{\text{QUERY}} = \{ w_1^{QUERY}, ..., w_m^{QUERY}, ..., w_M^{QUERY}, W_\emptyset\}$, where $w_m^{QUERY}$ denotes the estimated likelihood that the query echo beam sent in the k-th direction $(\theta_k, \phi_k) \in \theta \times \Phi$ corresponds to a tag $I_m$ of the set of labels $\{I_1, ..., I_m, ..., I_M\}$; for each of the K neighboring echo beams, delivering a set of numerical outputs $w^k = \{ w_1^k, ..., w_m^k, ..., w_M^k, w_\emptyset\}$, wherein $1 \le k \le K$; jointly processing the K+1 sets of numerical outputs $w^{\text{QUERY}}, w^1, ... w^K$, for predicting the tag type of the detected underwater object.

The jointly processing may be done as follows: calculating a weight value $\beta_m \forall m \in \{1, ..., M, \emptyset\}$ as follows:

$$\beta_m = \frac{\alpha^{QUERY} w_m^{QUERY} + (1 - \alpha^{QUERY}) \sum_{k=1}^K w_m^k}{K+1}$$

wherein

$$\alpha^{QUERY} \in \mathbb{R} [0, 1]$$

denotes the relative importance given to the likelihood extracted from the query echo $U^{QUERY}_{\theta,\phi}$ and statistical independence between $w^{QUERY}$ and $w^k$ is assumed; providing a result as output $\hat{l}$, being the tag that features a higher probability as per the evidence contained in the received signal set.

The result returned as output $\hat{l}$ may be calculated as follows: $\hat{l} = \begin{cases} \emptyset \; if \; \beta_\emptyset \geq 0.5, \\ \arg max_{m \in \{1,...,M\}} \; \beta_m \; \text{otherwise.} \end{cases}$

In embodiments of the invention, the object is a buoy.

A second aspect of the invention relates to a system for detecting and identifying underwater objects. The system comprises a sonar device located in a vessel for emitting at least one acoustic signal and receiving at least one echo signal. The system also comprises at least one underwater tag identifying system comprising processing means for: determining if an underwater object has been detected by verifying whether or not the at least one received echo signal is the consequence of a collision of the at least one acoustic signal with an underwater object; and if the presence of an underwater object is detected, determining the type of detected object by: applying a time-series pattern recognition process to said at least one received echo signal, and delivering a set of numerical outputs $w^k = \{ w^k_1 , ..., w^k_m , ..., w^k_M , w_\emptyset \}$, where $w^k_m$ denotes the estimated likelihood that an echo beam sent in the k-th direction $(\theta_k, \phi_k) \in \theta \; x \; \Phi$ corresponds to a tag $l_m$ of a set of tags $\{l_1, ..., l_m, ..., l_M\}$ previously defined, wherein each of the elements $l_m$ of the set of tags represents a tag with certain features, and $w_\emptyset$ denotes the probability that no object was detected. The system also comprises a module for predicting from the set of numerical outputs $w^k$ the tag type of the detected underwater object.

In embodiments of the invention, the at least one underwater tag identifying system comprises: an object recognition module for determining if an underwater object has been detected; and a pattern recognition module for determining the type of detected object.

In embodiments of the invention, the at least one underwater tag identifying system is further configured to: receive, together with the at least one echo signal, a K-sized set of neighboring echo beams; deliver a set of numerical outputs $w^{QUERY} = \{ w^{QUERY}_1 , ..., w^{QUERY}_m , ..., w^{QUERY}_M , w_\emptyset \}$, where $w^{QUERY}_m$ denotes the estimated likelihood that the query echo beam sent in the k-th direction $(\theta_k, \phi_k) \in \theta \; x \; \Phi$ corresponds to a tag $l_m$ of the set of labels $\{l_1, ..., l_m, ..., l_M\}$; for each of the K neighboring echo beams, deliver set of numerical outputs $w^k = \{ w^k_1 , ..., w^k_m , ..., w^k_M , w_\emptyset \}$, wherein $1 \leq k \leq K$; and jointly process the K+1 sets of numerical outputs $w^{QUERY}, w^1, ... w^K$, for predicting the tag type of the detected underwater object.

A third aspect of the invention relates to a computer program product comprising computer program instructions/code for performing the method of the first aspect of the invention.

A fourth aspect of the invention relates to a computer-readable memory/medium that stores program instructions/code for performing the method of the first aspect of the invention.

Additional advantages and features of the invention will become apparent from the detail description that follows and will be particularly pointed out in the appended claims.

**BRIEF DESCRIPTION OF THE DRAWINGS**

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows a medium-sized ship equipped with a sonar, emitting pulses and receiving the corresponding echoes, according to an embodiment of the present invention.

Figure 2 shows a schematic diagram of an underwater tag identifying system (UTIS) according to an embodiment of the present invention.

Figure 3A shows in more detail the schematic diagram of an underwater tag identifying system (UTIS) of Figure 2.

Figure 3B shows a block diagram of a signal processing module including the underwater tag identifying system (UTIS) of Figures 2 or 3A, and an aggregation module.

Figure 4 shows a schematic diagram of the inputs and outputs of a signal processing module of an underwater tag identifying system according to an embodiment of the present invention. The signal processing module comprises an underwater tag identifying system (UTIS) and an aggregation module.

## DESCRIPTION OF A WAY OF CARRYING OUT THE INVENTION

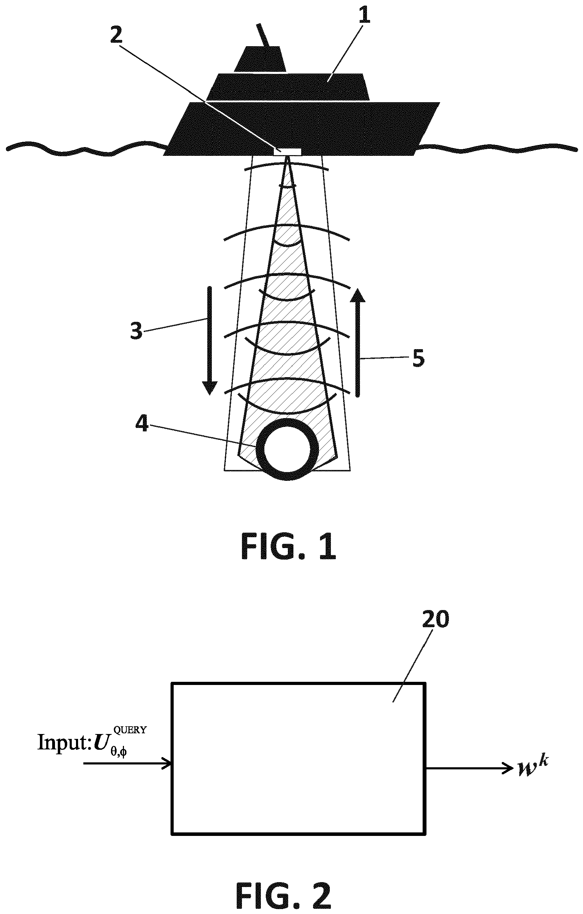

Figure 1 shows a medium-sized ship 1 (in general, vessel) located offshore. The ship 1 is equipped with a sonar 2, such as a monostatic and active sonar. The sonar 2 is used to detect and identify underwater objects, also referred to as targets. Non-limiting examples of possible underwater objects to be detected and identified are objects used for tracking underwater assets, such as underwater cables, underwater probes, offshore oil & gas stations and offshore renewable platforms; or objects used for any other underwater application, such as fishing, underwater speleology or any other underwater activity. These objects are typically associated to a buoy, which is located in the vicinity thereof. Therefore, in the context of the present invention, the objects to be detected and identified are buoys. The sonar 2 emits acoustic pulses or pings 3 at a certain frequency. Pulses 3 propagate through the water until they collide with an object or target 4. The pulses 3 bounce back as echo signals 5 and are received by the sonar 2. In Figure 1, the object 4 is a buoy. The diameter, material and internal composition of a buoy provides a precise response (echo) to a received pulse. The method of the present invention is capable of discriminating this response and therefore determining the type of detected object (buoy). In other words, when the sonar detects an object 4 (because it has received an echo), the method analyzes if the detected object 4 corresponds to a well-known tag or not.

The method performs correctly at depths of several tens of meters, such as up to 120-140 m. The detected buoys may have a minimum diameter of several centimeters ($10^{-3}$ meters), such as a minimum diameter of 2 cm, or of 5 cm, or of 10 cm. The detected buoys may have a maximum diameter of tens of centimeters, such as 40 cm, or 50, or 70 cm, or 100 cm. Buoys may be made of different materials or combinations of materials. They may comprise, for example, aluminium, composite plastics, or others.

Figure 2 shows a block diagram of an underwater tag identifying system (UTIS) 20 according to an embodiment of the present invention. System 20 receives and recognizes each echo signal 5 captured by the receiver of the sonar 2. System 20 may be located in the ship 1 or off the ship 1, for example on land or in another ship, such as a larger ship. Data received by the sonar 2, that is to say, echo signals 5 to be analyzed by system 20, may be provided to the system 20 either through a wired interface, for example when system 20 is located in the ship 1, or through a wireless interface, for example when system 20 is off the ship 1. System 20 is implemented in processing means, wherein the method for detecting and identifying objects is executed. Processing means may be implemented as one or more processors for example housed in a computing device, such as a server. The at least one processor may comprise a central processing unit which may have programmable hardware/electronics, such as, but without limitation, a field programmable integrated circuit such as an FPGA (i.e. field-programmable gate array), thus configured to run a real-time operating system which manages the field-programmable integrated circuit. In order to execute the proposed method for detecting and identifying objects, data storage means, such as a memory, is also required, in order to store the algorithm(s) for objects detection and identification to be executed and data associated to the executions. Data storage means are preferably housed in the computing device housing the processing means. Data storage means are preferably non-volatile memory means, such as a hard disk drive (HDD) or a solid-state drive (SSD). Data storage means may store computer program products to be executed and data, such as a tag data base comprising a collection of different types of buoys (tags) and their corresponding amplitude response to an echo, echoes received by the sonar and the results of the execution of the proposed method.

Objects to be detected and identified, such as buoy 4 in Figure 1, can be represented as labels or tags. Let $\{l_1, ..., l_m, ..., l_M\}$ be a set of labels or tags, wherein each of the elements, $l_m$, represents a tag with a known geometry and composition (e.g. material of group of materials). The geometry and composition of each tag, along with its position and depth, imprint varying perturbations in time and amplitude onto the echo signal 5 received by the sonar 2, in such a way that each tag has its own echo signature that may help distinguishing the specific tag model detected by the sonar 2. For example, depending on their construction, two different tags may result in a different form of pulse response in terms of the number of significant amplitude maxima and their temporal separation. The proposed method and system enables the joint detection and model identification of underwater tags through the analysis of received echoes 5, more particularly, through a time-series pattern recognition process.

In Figure 2, an underwater tag identifying system (UTIS) for detecting and identifying underwater objects through the analysis of the received echoes 5, is shown. The underwater tag identifying system (UTIS) 20 processes an echo 5 received by sonar 2 and delivers an estimation of the target detected by the echo 5, that is to say, the estimated likelihood that a beam sent in certain direction corresponds to certain tag. In the underwater tag identifying system (UTIS) 20 of Figure 2, $U_{\theta,\phi}$ represents a single echo received in the direction of $\theta$ and $\phi$ polar and azimuthal coordinates with respect to the sonar receiver when an emitted pulse or ping 3 collides with an object 4. More specifically, $U_{\theta,\phi}$ is a time series composed by different samples $u^{j}_{\theta,\emptyset}$ over a finite time interval T:

$$U^{QUERY}_{\theta,\phi} = \left(u^{1}_{\theta,\phi} \quad,...,\quad u^{t}_{\theta,\phi} \quad,...,\quad u^{T}_{\theta,\phi}\right) \qquad (1)$$

Therefore, $U^{QUERY}_{\theta,\phi}$ denotes the amplitude of the reflected signal received as a result of the emitted ping 3, which is read by system 20 for its analysis. The position of the object 4 in spherical coordinates, i.e., depth, polar and azimuthal angles with respect to the sonar 2, is represented as p = ($r_{o}$, $\theta_{o}$, $\phi_{o}$). The position of the detected object 4 is unknown to the sonar 2.

In general, system 20 is applied separately to each echo $U^{QUERY}_{\theta,\phi}$ in a an echo set $u_{\theta,\Phi}$ received by sonar 2, which is a conventional sonar and is out of the scope of the present invention. By this notation $\theta$ (respectively,$\Phi$) denotes a set of $\theta$ (correspondingly $\phi$) neighboring values as per the scanning schedule set in the radar device (sonar 2). The set of neighboring values are echoes - responses - to pulses emitted in neighboring angular directions, i.e. response to excitation at an angle of 35° and 36°, for example. Sonar beams sent along these directions are prone to impacting on the same object should this exist. Therefore, better classification accuracy can be expected if decisions taken for each echo are fused together under a certain aggregation approach (neighboring beams). This notation also accommodates any other source of coherent redundancy for the classification (e.g. repeated beams sent in the same ($\theta$, $\phi$) direction over time), just by extending the notation as e.g. $u_{\theta,\Phi,\Gamma}$, where $\Gamma$ is the set of different absolute times at which beams were sent in the same direction.

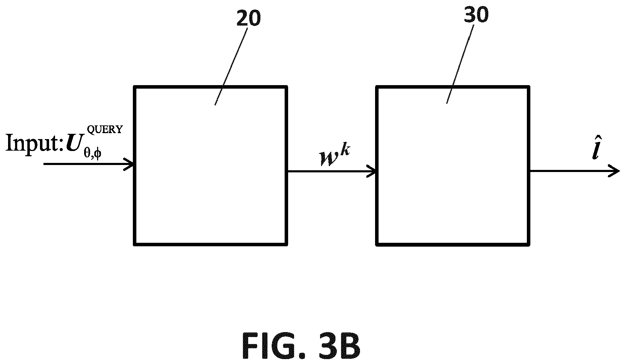

It is assumed that the number of neighboring beams (i.e. the cardinality of $u_{\theta,\Phi}$) is given by K, such that for each received echo $U_{\theta,\Phi}$, the system 20 delivers a set of numerical outputs W = $\{w^{k}\}^{K}_{k=1}$ with $w^{k} = \{ w^{k}_{1} , ..., w^{k}_{m} , ..., w^{k}_{M} , w_{\emptyset}\}$, where $w^{k}_{m}$ denotes the estimated likelihood that the beam sent in the k-th direction ($\theta_{k}$, $\phi_{k}$) $\in \theta \times \Phi$ corresponds to tag $l_{m}$, and $w_{\emptyset}$ denotes the probability that no object was detected as per the received echo set. The outputs of UTIS 20 act as input for an aggregation module 30, as shown for example in Figure 3B, which analyzes every outcome and returns a final prediction $\hat{l}$ of the whole system. The underwater tag identifying system (UTIS) 20 and the aggregation module 30 may be comprised in a signal processing module (SPM).

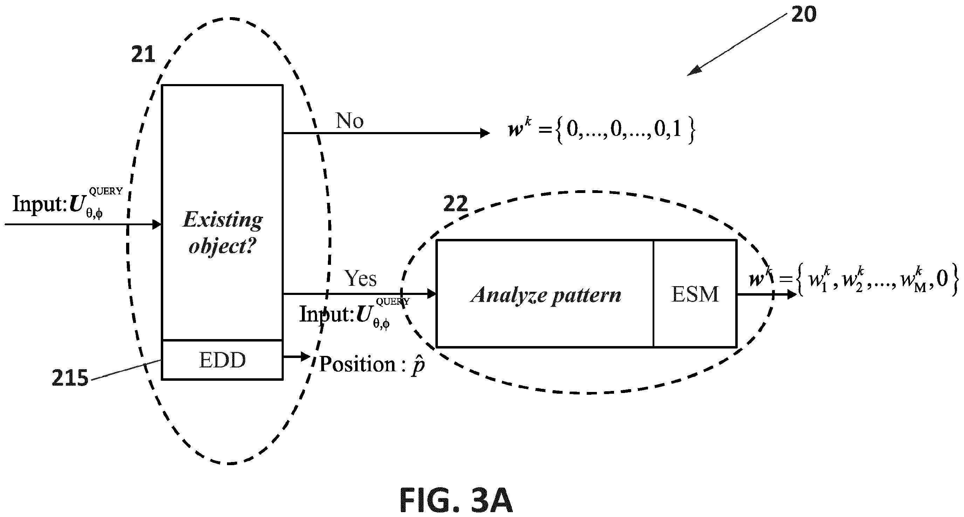

Referring now to Figure 3A, which represents in more detail the underwater tag identifying system (UTIS) 20 of Figure 2, in which a single echo is represented, system 20 has two modules. A first module is an object recognition module (ORM) 21 and a second module is a pattern recognition module (PRM) 22. The received echo $U_{\theta,\phi}$ acts as input for the object recognition module 21. The object recognition module 21 analyzes the received echo $U_{\theta,\phi}$ to verify whether the received reflection has collided with an underwater object. In other words, the goal of the object recognition module 21 is to detect the presence of submerged objects. To this end, the object recognition module 21 uses an energy detector device (EDD) 215, preferably embedded into the system. The energy detector device (EDD) 215 is out of the scope of the present invention. The energy detector device 215 is a functionality that may be embedded in sonar 2 or may be implemented outside the sonar. Therefore, at the object recognition module 21 it is first established whether an object (buoy) has been recognized or not (output "Yes" or output "No" at the object recognition module 21 in Figure 3). When an object has been recognized, an estimated position $\hat{p}$ of the object is provided, as shown in Figure 3A, calculated from the information obtained at the energy detector device (EDD) 215.

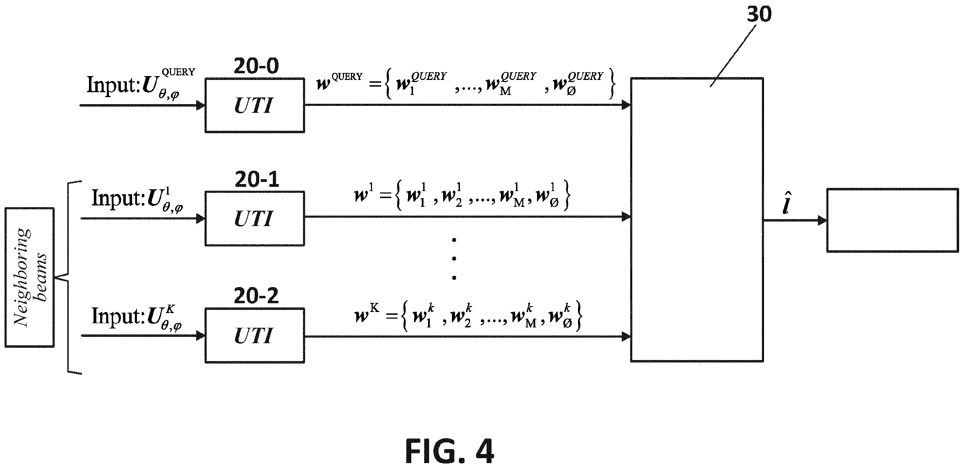

That is to say, using an energy detector device (EDD) 215, the object recognition module 21 generates the following outputs: (1) When neither an object nor a tag have been identified in the received echo $U^{QUERY}_{\theta,\phi}$, the object recognition module 21 generates a FALSE message. In this case the analysis ends at this stage, and the output "No" according to this situation is delivered. (2) When the object recognition module 21 detects the presence of an underwater object, the object recognition module 21 generates a TRUE output. In this case (Yes output at block 21), the detected echo $U^{QUERY}_{\theta,\phi}$ is forwarded to the pattern recognition module 22 for its identification. It is remarked that, in preferred embodiments, together with the detected echo $U^{QUERY}_{\theta,\phi}$, a set of neighbor echoes $u_{\theta,\Phi}$ associated to the detected echo $U^{QUERY}_{\theta,\phi}$ is also forwarded to the pattern recognition module 22 for their joint identification. The set of neighbor echoes represents a set of angularly adjoining pulse excitation angles. This is shown in Figure 4, not yet described, in which each neighbor echo is identified with superscript i, wherein $1 \le i \le K$. In Figure 3A only one beam is shown. When no object is recognized by the sonar - by object recognition module 21-, or an object which is not a tag is detected, (output "No" in block 21), $w^{k}$ = {0, ..., 0, ..., 1}, wherein $w_{\emptyset}$ =1, which means "no tag". And when an object is recognized by the object recognition module 21 (output "Yes" in block 21), $\mathsf{w}^k = \{\, w_1^k \,,\, w_2^k,\, ...,\, w_M^k \,,\, 0\}$, wherein $w_\varnothing = 0$.

The energy detector device 215 is usually controlled by a threshold $\gamma$ that indicates the minimum signal to background noise ratio required to decide that an object has been detected. Many different numerical computations can be followed to estimate the optimal value of this threshold given an operational scenario and related characteristics. As a matter of example, the Constant False alarm rate may be used. Besides, a rough estimation $\hat{p}$ of the position of the object can be provided. Non-limiting techniques of performing this estimation are detecting the peak of the echo signal $U^{QUERY}_{\theta,\phi}$, or using a matched filter for detecting the time instant at which the crossed-correlation is maximum, among others.

In other words, when the object recognition module 21 receives the detection of an object, it analyzes if this object can be identified as a tag, or if, on the contrary, it corresponds to an unidentified object. In this case, "no tag" is returned as output. The system has a database of known tags; therefore, it tries to relate all the echoes (or the only echo, as in Figures 3A and 3B) it receives with some of the tags stored in the database. Once the energy detector device 215 has informed about the existence of an object underwater, the main objective of the pattern recognition module 22 is to classify the object as a tag type and to estimate the position of the detected object. When an object has been recognized, at the pattern recognition module 22 a time-series pattern-recognition process is run in order to predict the type of object. The time-series pattern-recognition process is based on a measure of similarity between time series. In preferred embodiments, the proposed time-series pattern-recognition process is based on an elastic measure of similarity between time series to prevent the time shift (time delay) between echo responses from affecting the comparison of two time series. That is, in preferred embodiments, the comparison between the received signal and the signature database (tag database) does not depend on the time delay of the received echo.

The discriminability of objects depends on the richness of the annotated time series database utilized in the pattern recognition module 22. Referring back to outputs $\mathsf{w}^k = \{\, w_1^k \,,\, ...,\, w_j^k \,,\, ...,\, w_M^k \,,\, \mathsf{W}\varnothing\}$, element $w_\varnothing$ represents a *no tag* element, namely $w_m^k$ is 1 if the object recognition module 21 returns a NULL value, or if the pattern recognition module 22 has detected an object that does not correspond to a known tag. In any other case $w_m^k$ is given value 0. This is explained later with reference to Figure 4, where the M+1 elements in $\mathsf{w}^k$ relate to the single echo $U_{\theta,\phi}$ and its spatially surrounding echoes.

Next it is explained how $w_m^k$ is computed and a tag type is predicted $\hat{l}$, namely the probability given by the pattern recognition module 22 for the fulfillment of the following statement: the analyzed echo has detected an object and this object is tag $l_m$. In order to predict the tag type under which a detected object is classified, the pattern recognition module 22 may use an Elastic Similarity based Nearest Neighbor (ES-NN) classifier. A possible embodiment of an ES-NN is described next.

Let

$$\mathcal{B}_{\mathsf{ref}} = \{(\mathsf{B}_m,\, l_m)\}^M_{m=1}$$

be a set of annotated reference samples that compose the knowledge database of the classifier, where

$$\mathsf{B}_m = (b_m^1 \,,\, ...,\, b_m^t,..., b_m^T) \in \mathbb{R}^T$$

represents the signature of the m-th reference sample, and $l_m \in \{1, ..., M\}$ its label type (tag type). Without loss of generality and to ease subsequent explanations, it is assumed that the knowledge database only comprises one single reference sample per tag label. Consider a query echo $U^{QUERY}_{\theta,\phi}$ whose label must be predicted, and for now let us disregard $u^{QUERY}_{\theta,\Phi}$ (set of associated echo beams). To accomplish this goal, in an embodiment of the present invention the pattern recognition module 22 uses a 1-Nearest Neighbor classifier that works as follows:

First, vector of distances $\mathsf{d}^{QUERY} = (d_1^{QUERY} \,,\, ...,\, d_m^{QUERY},..., d_M^{QUERY})$ is computed, where $d_m^{QUERY}$ represents the similarity between $U^{QUERY}_{\theta,\phi}$ and the m-th signature in $\mathcal{B}_{\mathsf{ref}}$. At this point, in embodiments of the invention only an

echo for a $(\theta, \phi)$ combination is processed. In this case, a performance boost of the overall system is achieved by aggregating decisions.

Then, the computed distances are normalized by $\sum_{m=1}^{M} d_m^{QUERY}$ so as to sum 1. Then, an approximation of the likelihood under which $U^{QUERY}_{\theta,\phi}$ can be thought to be an echo bounced back by reflecting on a tag model m, is rendered. This yields an approximation for the conditional probability $Pr(l_m | U^{QUERY}_{\theta,\phi}) \equiv w_m^{QUERY}$, wherein $w_m^{QUERY}$ denotes the estimated likelihood that the query echo beam sent in the k-th direction $(\theta_k, \phi_k) \in \theta \times \Phi$ corresponds to a tag $l_m$ of the set of labels $\{l_1, ..., l_m, ..., l_M\}$.

Next, the label $\hat{l}$ of the most similar signature to the echo in the set $\mathcal{B}_{ref}$ is assigned, i.e.

$$\hat{l} = \underset{m \in \{1, ..., M\}}{\arg \max} \ w_m^{QUERY}, \tag{2}$$

where $\hat{l}$ denotes the predicted class for the object detected by the energy detector device 215.

In order to measure the similarity among query and reference signatures, in this embodiment the pattern recognition module 22 uses Elastic Similarity Measures (ESMs) to compute the above measure of similarity between time series (patterns). Non-limiting examples of Elastic Similarity Measures that may be used are Dynamic Time Warping (DTW), On-line Dynamic Time Warping (ODTW) and Edit-based measures of similarity. Depending on the ESM used, the time axis may shrink or stretch to find the best alignment between time series. This allows the tag identification process to perform more accurately by preventing the similarity computation from effects of the object depth (represented as lags in time domain) or nonlinear distortions in the water medium, such as amplitude warps, on the received signal(s).

It is now considered that, associated to the query echo $U^{QUERY}_{\theta,\phi}$, a K-sized set of neighboring beams or set of associated echo beams

$$\mathcal{u}^{QUERY}_{\theta,\Phi} = \left\{ U^{QUERY} \right\}_{k=1}^{K}$$

is received by the sonar, as shown in Figure 4. In Figure 4, the neighboring echoes or neighboring beams received by the sonar are referred to as $U^1_{\theta,\phi}, ... U^K_{\theta,\phi}$. Each echo or beam is the input of a different underwater tag identifying system (UTIS) 20-0, 20-1, ..., 20-K. It is remarked that, in an alternative embodiment, all inputs (echoes or beams) $U^{QUERY}_{\theta,\phi}, U^1_{\theta,\phi}, ... U^K_{\theta,\phi}$ may be processed in a single UTIS 20. In this case, multiplexing means are required in order to process each beam one by one; and already processed outputs $w^{QUERY}, w^1, ..., w^K$ should be stored until of the them are obtained. In Figure 4, each system 20-0, 20-1, ..., 20-K delivers a corresponding output $w^{QUERY}, w^1, ..., w^K$. All these outputs are introduced in an aggregation module 30, which is in charge of jointly processing the decision made for every beam in $u^{QUERY}_{\theta,\Phi}$ and provide the user with a final decision on the eventually detected underwater object. The final decision is for example a predicted tag type $\hat{l}$. This is done as follows:

Once each underwater tag identifying system 20-0, 20-1, ..., 20-K respectively receives the query echo $U^{QUERY}_{\theta,\phi}$ and its neighboring dataset $u^{QUERY}_{\theta,\phi}$ as inputs, each system 20-0, 20-1, ..., 20-K computes the conditional likelihoods:

$$w^{QUERY} = \left\{ w_1^{QUERY}, ..., w_M^{QUERY}, w_\emptyset^{QUERY} \right\} \tag{3}$$

$$w^k = \left\{ w_1^k, ..., w_M^k, w_\emptyset^k \right\} \tag{4}$$

where $w_\emptyset^{QUERY}$ takes value 1 if the energy detector device (EDD) 215 declares no object as per the information in the received signal, and 0 otherwise. The same criterion holds for the neighboring beams in $u^{QUERY}_{\theta,\Phi}$ (correspondingly, $w_\emptyset^k \ \forall k \in \{1, ..., K\}$). Given this information, the aggregation block 30 in Figure 4 processes the obtained likelihoods to produce an overall class-wide statistic from which to take a decision. This may be done in several ways.

In a particular embodiment, a straightforward approach is used, in which a weighted majority is performed by voting among the decisions made locally based on w$^{QUERY}$ and {w$^k$}$^K_{k=1}$. Matematically:

$$\beta_m = \frac{\alpha^{\text{QUERY}} w_m^{\text{QUERY}} + (1 - \alpha^{\text{QUERY}}) \sum_{k=1}^{K} w_m^k}{K + 1} \qquad (5)$$

where i)

$$\alpha^{QUERY} \in \mathbb{R}\ [0,\ 1]$$

denotes the relative importance given to the likelihood extracted from the query echo U$^{QUERY}_{\theta,\phi}$; and ii) statistical independence between w$^{QUERY}$ and {w$^k$}$^K_{k=1}$ is assumed. Once $\beta_m$ is calculated $\forall m \in \{\mathbf{1},..., \mathbf{M}, \mathbf{\varnothing}\}$, the result returned as output $\hat{l}$ is the tag that features a higher probability as per the evidence contained in the received signal set, namely:

$$\hat{l} = \begin{cases} \varnothing & \text{if } \beta_{\varnothing} \geq 0.5, \\ \arg\max_{m \in \{1,...,M\}} \beta_m & \text{otherwise,} \end{cases} \qquad (6)$$

i.e. a tag model prediction is triggered only when there is a clear evidence (as per $\beta_{\varnothing}$) that there is an object in the directions sensed by the sonar.

Other aggregation approaches may be used alternatively. For instance, a more reliable fusion could be achieved in the statistical independence assumption was overridden by e.g. estimating the conditional relationship between $w_m^k$ and $w_m^{k\prime}$ for any (k, k') ∈ {1, ..., K} x {1, ..., K}. This could be done, for instance, by adjusting a parametric distribution to a historical trace of value pairs, such that once fitted, the statistical distribution can be queried to perform a more refined estimation of the aggregated statistic in (5).

It has therefore been explained how underwater objects are detected by a sonar and, although the characteristics of the detected objects are unknown, an analysis of the received echo performed by a time-series based classifier enables to obtain the position and the type of the detected object.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A computer-implemented method for detecting and identifying underwater objects, comprising:

emitting by a sonar device (2) located in a vessel (1) at least one acoustic signal (3);
receiving by the sonar device (2) at least one echo signal (U$^{QUERY}_{\theta,\phi}$);
determining if an underwater object (4) has been detected by verifying whether or not the at least one received echo signal (U$^{QUERY}_{\theta,\phi}$) is the consequence of a collision of the at least one acoustic signal (3) with an underwater object (4), and

if no underwater object (4) has been identified, the analysis is ended;
if the presence of an underwater object (4) is detected:

applying a time-series pattern recognition process to said at least one received echo signal (U$^{QUERY}_{\theta,\phi}$);
delivering a set of numerical outputs W$^k$ = { $w_1^k$ , ..., $w_m^k$ , ..., $w_M^k$ , W$\varnothing$}, where $w_m^k$ denotes the estimated likelihood that an echo beam sent in the k-th direction ($\theta_k$, $\phi_k$) ∈ $\theta$ x $\Phi$ corresponds to a

tag $I_m$ of a set of tags $\{I_1, ..., I_m, ..., I_M\}$ previously defined, wherein each of the elements $I_m$ of the set of tags represents a tag with certain features; and $w_\emptyset$ denotes the probability that no object was detected; predicting from the set of numerical outputs $w^k$ the tag type $(\hat{l})$ of the detected underwater object (4).

2. The method of claim 1, wherein the step of determining if an object (4) has been detected is done by comparing the signal to background noise ratio of the at least one echo signal ($U^{QUERY}_{\theta,\phi}$) with a threshold indicating a minimum signal to background noise ratio required to decide that an object (4) has been detected.

3. The method of any one of the preceding claims, wherein the step of determining if an object (4) has been detected further includes estimating the position ($\hat{p}$) of the object (4).

4. The method of any one of the preceding claims, wherein in order to predict the tag type ($\hat{l}$) of the detected underwater object (4), and therefore identify the detected object (4), an Elastic Similarity based Nearest Neighbor (ES-NN) classifier is used, the classifier comprising a knowledge database having a set

$$\mathscr{B}_{ref} = \{(B_m, I_m)\}^M_{m=1}$$

of annotated reference samples, wherein

$$B_m = (b^1_m, ..., b^t_m, ..., b^T_m) \in \mathbb{R}^T$$

represents the signature of the m-th reference sample, and $I_m \in \{1, ..., M\}$ its label.

5. The method of claim 4, wherein in order to predict the label of a query echo signal ($U^{QUERY}_{\theta,\phi}$), the method performs the following steps:

computing a vector of distances $d^{QUERY} = (d^{QUERY}_1, ..., d^{QUERY}_m, ..., d^{QUERY}_M)$, wherein $d^{QUERY}_m$ represents the similarity between $U^{QUERY}_{\theta,\phi}$ and the m-th signature in $\mathscr{B}_{ref}$;

normalizing the computed distances by $\sum^M_{m=1} d^{QUERY}_m$ so as to sum 1;

obtaining an approximation for the conditional probability $Pr(I_m| U^{QUERY}_{\theta,\phi}) \equiv w^{QUERY}_m$, representing the likelihood under which the query echo signal $U^{QUERY}_{\theta,\phi}$ is an echo bounced back by reflecting on a tag model m, where $w^{QUERY}_m$ denotes the estimated likelihood that the query echo beam sent in the k-th direction ($\theta_k$, $\phi_k$) $\in \theta \times \Phi$ corresponds to a tag $I_m$ of the set of labels $\{I_1, ..., I_m, ..., I_M\}$;

assigning the label $\hat{l}$ of the most similar signature to the echo in the set $\mathscr{B}_{ref}$ as $\hat{l} =$

$$\underset{m \in \{1, ..., M\}}{\arg max} w^{QUERY}_m,$$

where $\hat{l}$ denotes the predicted class for the detected object (4).

6. The method of any one of the preceding claims, wherein together with the at least one echo signal ($U^{QUERY}_{\theta,\phi}$), a K-sized set of neighboring echo beams ($U^1_{\theta,\phi}, ... U^K_{\theta,\phi}$) is received by the sonar (2), the method further comprising:

delivering a set of numerical outputs $w^{QUERY} = \{ w^{QUERY}_1, ..., w^{QUERY}_m, ..., w^{QUERY}_M, w_\emptyset\}$, where $w^{QUERY}_m$ denotes the estimated likelihood that the query echo beam sent in the k-th direction ($\theta_k$, $\phi_k$) $\in \theta \times \Phi$ corresponds to a tag $I_m$ of the set of labels $\{I_1, ..., I_m, ..., I_M\}$;

for each of the K neighboring echo beams ($U^1_{\theta,\phi}, \ldots U^K_{\theta,\phi}$), delivering a set of numerical outputs

$W^k = \{\, w^k_1, \ldots, w^k_m, \ldots, w^k_M, W_\emptyset \}$, wherein $1 \leq k \leq K$;

jointly processing the K+1 sets of numerical outputs $w^{QUERY}$, $w^1$, ... $w^K$, for predicting the tag type ($\hat{l}$) of the detected underwater object (4).

7. The method of claim 6, wherein said jointly processing is done as follows:

calculating a weight value $\beta_m$ $\forall m \in \{1, \ldots, M, \emptyset\}$ as follows:

$$\beta_m = \frac{\alpha^{QUERY} w^{QUERY}_m + \left(1 - \alpha^{QUERY}\right) \sum_{k=1}^{K} w^k_m}{K+1}$$

wherein

$$\alpha^{QUERY} \in \mathbb{R}\,[0,\ 1]$$

denotes the relative importance given to the likelihood extracted from the query echo $U^{QUERY}_{\theta,\phi}$ and statistical independence between $w^{QUERY}$ and $w^k$ is assumed;

providing a result as output $\hat{l}$, being the tag that features a higher probability as per the evidence contained in the received signal set.

8. The method of claim 7, wherein the result returned as output $\hat{l}$ is calculated as follows:

$$\hat{l} = \begin{cases} \emptyset \; if \; \beta_\emptyset \geq 0.5, \\ \arg\,max_{m \in \{1, \ldots, M\}} \beta_m \, otherwise. \end{cases}$$

9. The method of any one of the preceding claims, wherein said object (4) is a buoy.

10. A system for detecting and identifying underwater objects, comprising:

a sonar device (2) located in a vessel (1) for emitting at least one acoustic signal (3) and receiving at least one echo signal ($U^{QUERY}_{\theta,\phi}$);
at least one underwater tag identifying system (20; 20-0, 20-1, ..., 20-K) comprising processing means for:
determining if an underwater object (4) has been detected by verifying whether or not the at least one received echo signal ($U^{QUERY}_{\theta,\phi}$) is the consequence of a collision of the at least one acoustic signal (3) with an underwater object (4); and if the presence of an underwater object (4) is detected, determining the type of detected object by:

applying a time-series pattern recognition process to said at least one received echo signal ($U^{QUERY}_{\theta,\phi}$), and

delivering a set of numerical outputs $W^k = \{\, w^k_1, \ldots, w^k_m, \ldots, w^k_M, W_\emptyset \}$, where $w^k_m$ denotes the estimated likelihood that an echo beam sent in the k-th direction ($\theta_k, \phi_k) \in \theta \times \Phi$ corresponds to a tag $l_m$ of a set of tags $\{l_1, \ldots, l_m, \ldots, l_M\}$ previously defined, wherein each of the elements $l_m$ of the set of tags represents a tag with certain features, and $w_\emptyset$ denotes the probability that no object was detected;

a module (30) for predicting from the set of numerical outputs $w^k$ the tag type ($\hat{l}$) of the detected underwater object (4).

11. The system of claim 10, wherein the at least one underwater tag identifying system (20; 20-0, 20-1, ..., 20-K) comprises:

an object recognition module (21) for determining if an underwater object (4) has been detected;
a pattern recognition module (22) for determining the type of detected object.

**12.** The system of either claim 10 or 11, wherein the at least one underwater tag identifying system (20; 20-0, 20-1, ..., 20-K) is further configured to:

receive, together with the at least one echo signal ($U^{QUERY}_{\theta,\phi}$), a K-sized set of neighboring echo beams ($U^1_{\theta,\phi}, ... U^K_{\theta,\phi}$),

deliver a set of numerical outputs $W^{QUERY} = \{ w^{QUERY}_1 , ..., w^{QUERY}_m , ..., w^{QUERY}_M , W_\emptyset\}$, where $w^{QUERY}_m$ denotes the estimated likelihood that the query echo beam sent in the k-th direction ($\theta_k, \phi_k$) $\in \theta \times \Phi$ corresponds to a tag $I_m$ of the set of labels $\{I_1, ..., I_m, ..., I_M\}$;

for each of the K neighboring echo beams ($U^1_{\theta,\phi}, ... U^K_{\theta,\phi}$), deliver set of numerical outputs $W^k = \{ w^k_1 , ..., w^k_m , ..., w^k_M , W_\emptyset\}$, wherein $1 \leq k \leq K$; and

jointly process the K+1 sets of numerical outputs $w^{QUERY}, w^1, ... w^K$, for predicting the tag type ($\hat{I}$) of the detected underwater object (4).

**13.** A computer program product comprising computer program instructions/code for performing the method according to any one of claims 1-9.

**14.** A computer-readable memory/medium that stores program instructions/code for performing the method according to any one of claims 1-9.

**FIG. 1**

Input: $U_{\theta,\phi}^{QUERY}$ → 20 → $w^k$

**FIG. 2**

**FIG. 3A**

20

21

22

215

Input: $U_{\theta,\phi}^{QUERY}$

Existing object?

EDD

No

$w^k = \{0,\ldots,0,\ldots,0,1\}$

Yes

Input: $U_{\theta,\phi}^{QUERY}$

Position: $\hat{p}$

Analyze pattern

ESM

$w^k = \{w_1^k, w_2^k, \ldots, w_M^k, 0\}$

Input: $U_{\theta,\phi}^{QUERY}$ → [ 20 ] → $w^k$ → [ 30 ] → $\hat{l}$

# FIG. 3B

EP 3 816 664 A1

Input: $U_{\theta,\varphi}^{QUERY}$ → **20-0** $UTI$ → $w^{QUERY} = \left\{ w_1^{QUERY}, ..., w_M^{QUERY}, w_\emptyset^{QUERY} \right\}$

*Neighboring beams*

Input: $U_{\theta,\varphi}^1$ → **20-1** $UTI$ → $w^1 = \left\{ w_1^1, w_2^1, ..., w_M^1, w_\emptyset^1 \right\}$

Input: $U_{\theta,\varphi}^K$ → **20-2** $UTI$ → $w^K = \left\{ w_1^k, w_2^k, ..., w_M^k, w_\emptyset^k \right\}$

**30**

$\hat{l}$

**FIG. 4**

Europäisches
Patentamt

European
Patent Office

Office européen
des brevets

## EUROPEAN SEARCH REPORT

Application Number

EP 19 38 2961

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Robert Thomas Olszewski: "Generalized feature extraction for structural pattern recognition in time-series data", , 1 February 2001 (2001-02-01), XP055693100, Pittsburgh, PA 15213 ISBN: 978-0-493-53871-6 Retrieved from the Internet: URL:https://www.cs.cmu.edu/~bobski/pubs/tr01108-twosided.pdf [retrieved on 2020-05-08] | 1-3, 6-11,13, 14 | INV. G01S7/539 G01S15/04 G01S15/06 G01S15/74 |
| Y | * page 1 - page 5; figures 2.1-2.4 * * page 18 - page 20 * * Secions 3.3 to 3.6 * * Sections 4.1, 4.3; figures 4.5-4.7 * * Appendix A * ----- | 4,5 | |
| A | MATHEUS DOS SANTOS ET AL: "Object Classification in Semi Structured Enviroment Using Forward-Looking Sonar", SENSORS, vol. 17, no. 10, 29 September 2017 (2017-09-29), page 2235, XP055692656, DOI: 10.3390/s17102235 * the whole document * ----- | 1-14 | |

TECHNICAL FIELDS
SEARCHED      (IPC)

G01S

-/--

The present search report has been drawn up for all claims

| Place of search | Date of completion of the search | Examiner |
|---|---|---|
| Munich | 11 May 2020 | Zaneboni, Thomas |

EPO FORM 1503 03.82 (P04C01)

Europäisches
Patentamt

European
Patent Office

Office européen
des brevets

## EUROPEAN SEARCH REPORT

Application Number

EP 19 38 2961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LINES JASON ET AL: "Time series classification with ensembles of elastic distance measures", JOURNAL OF DATA MINING AND KNOWLEDGE DISCOVERY, NORWELL, MA, US, vol. 29, no. 3, 28 June 2014 (2014-06-28), pages 565-592, XP035479565, ISSN: 1384-5810, DOI: 10.1007/S10618-014-0361-2 [retrieved on 2014-06-28] * abstract *; figures 1-3 * * Section 1. * * Sections 2.1 to 2.8; page 576 * * Section 6 * ----- | 4,5 | |

TECHNICAL FIELDS
SEARCHED       (IPC)

The present search report has been drawn up for all claims

| Place of search | Date of completion of the search | Examiner |
|---|---|---|
| Munich | 11 May 2020 | Zaneboni, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9213099 B1
- WO 2015185032 A